# EUROPEAN PATENT APPLICATION

(11) **EP 4 635 377 A1**
(43) Date of publication of application: **22.10.2025**
(21) Application number: 25168707.5
(22) Date of filing: 04.04.2025
(51) Int. Cl.: A47J 31/06, A47J 31/08, A47J 31/44

(54) **ADAPTER DEVICE FOR A FILTER HOLDER ELEMENT**

(30) Priority: 16.04.2024 IT 202400001672 U
(71) Applicant: Rocket Milano S.r.L., 20060 Liscate (MI) (IT)
(72) Inventor: BERTI, Ennio, 20060 Liscate (IT); FERRETTI, Matteo, I-20060 Liscate (MI) (IT)
(74) Representative: Cammareri, Emanuele

(57) **Abstract**

An adapter device (D) for a filter holder element (PF) of a machine for the production by extraction of a hot liquid coffee-based beverage comprises a hollow main cup-shaped element (1), said main element (1) carrying, arranged and mounted within it, in adjacent layers and in sequence: a first elastic element (2), said first element (2) being superimposed and coupled to a second filtering element (3), said second element (3) being superimposed to a third sealing element (4), said third element (4) being arranged in a cup-shaped element (5), said cup-shaped element (5) being able to be coupled and to cooperate with a gasket (6), and having in its lower part a hollow cylindrical appendix (7), within which a check valve (V) is inserted.

## Description

This utility model relates to an adapter device for a filter holder element.

The utility model in question is advantageously used in the public catering sector, such as bars or equivalent premises, in machines for the production by extraction of a hot liquid coffee-based beverage, to which the following description will make explicit reference without losing generality.

In the catering sector and similar, the use of a machine for the production of hot coffee-based beverages or equivalent blends is universally known, which essentially comprises a percolation unit for each machine capable of producing and dispensing liquid coffee and a touch screen or buttons through which a user can choose the blend or quality of coffee (for example Arabica, etc.) and/or type of dispensing, such as espresso, ristretto coffee, long coffee, intense coffee, decaffeinated coffee, etc.

The aforementioned percolation unit also includes a slide-in filter holder element, a cup-shaped seat of which is filled with ground coffee and a release unit for spreading hot water over the aforementioned filter holder element and thereby making, by extraction, the type of coffee-based beverage chosen and to be dispensed, through a spout carried by the same filter holder, in cups, mugs, glasses or equivalent containers. The object of the present invention is to make an adapter device that can be coupled to a filter holder element to make it possible at all times to use the filter holder itself not only with the usual doses of ground bulk coffee but also with various types of individual disposable packages of ground coffee currently available on the market, such as filter paper coffee pods or similar containers.

The structural and functional characteristics of the present utility model and its advantages over the known art will be even clearer and more apparent from the claims below and in particular from an examination of the following description, referring to the attached drawings, which show the schematic representations of a preferred but not limiting embodiment of an adapter device, in which:
- Figure 1 is an exploded front view showing the components of a preferred embodiment of the device which is the object of the present utility model;
- Figure 2 is a schematic perspective view of the device in question;
- Figure 3 is a front section view of the device illustrated in Figure 2;
- Figure 4 is a front view of the device illustrated in Figure 2;
- Figure 5 is a top plan view of the device in question;
- Figure 6 is a bottom plan view of the device in question; and
- Figure 7 shows, in a perspective view, a slide-in filter holder element compatible with the adapter device in question.

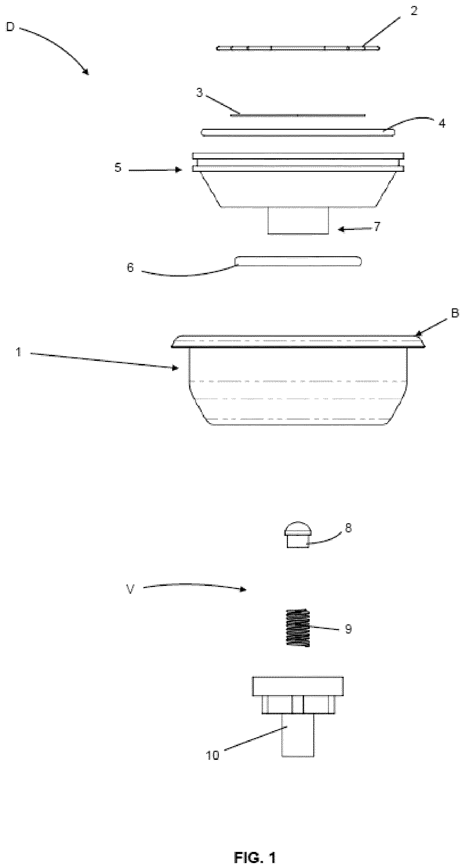

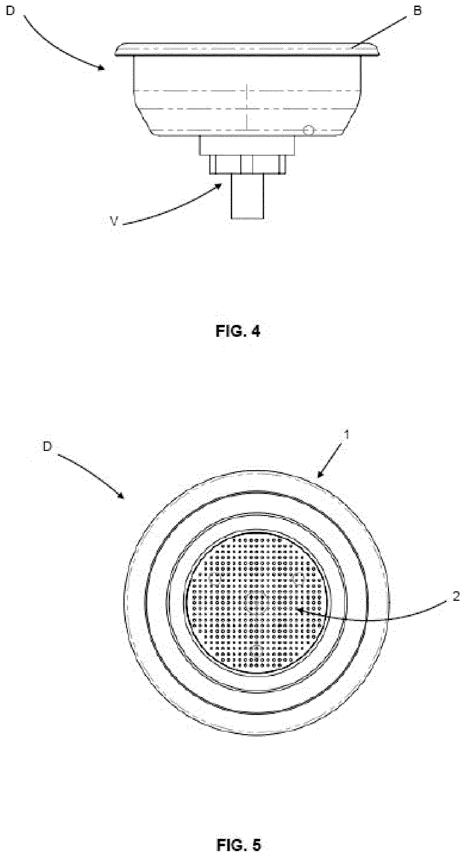

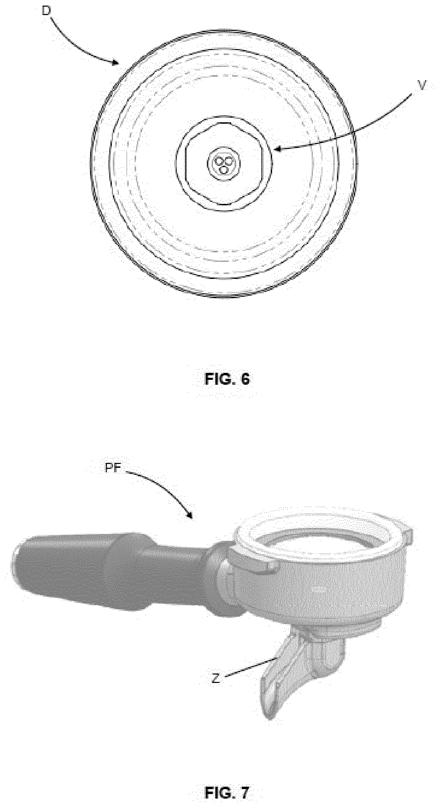

With specific reference to the attached Figures 1 to 7, the letter D globally denotes a removable and compatible adapter device for a filter holder element PF of a machine (of the known type and not illustrated) for the production by extraction of a hot liquid coffee-based beverage.

In particular, the filter holder element PF preferably but not limitedly indicated to accommodate device D, has a seat or cup with a height greater than 25 millimeters so as to make it possible to use filter paper coffee pods (of the known type and not illustrated) of the type referred to as ESE 44 or equivalent.

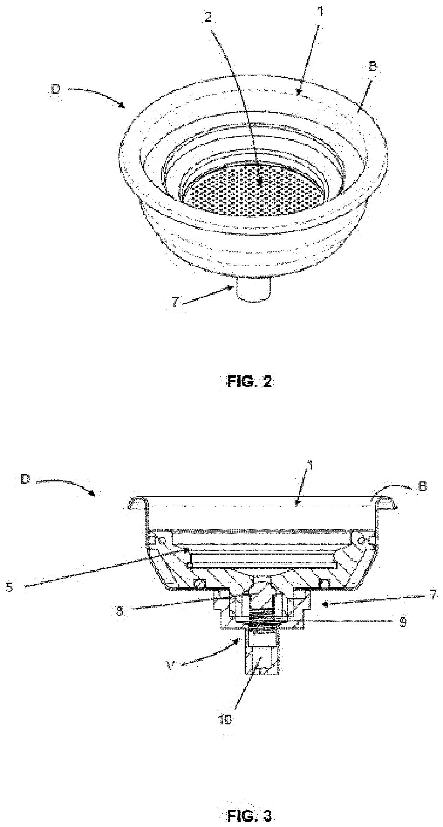

As best illustrated in the exploded view of Figure 1 and in Figures 2 and 3, the device D comprises a hollow main cup-shaped element 1, which has a rounded upper circular outer edge B and carries, arranged and mounted within it, in adjacent layers and in sequence: a first elastic element or spring 2 filter element (in use in contact with the bottom surface of a coffee pod) superimposed on and coupled with second filter element 3, a third element (O-ring) 4, a cup-shaped element 5 with a substantially inverted trapezoidal shape, and a sealing ring gasket 6 cooperating with the element 5 when inserted in the main element 1.

The cup-shaped element 5 has a hollow cylindrical appendix 7 in its lower part, within which a check valve V is inserted.

The check valve V (preferably with a 3/4 bar setting) essentially comprises a pawl 8, a spring 9 and a terminal element.

This valve V, in use, is designed to fit into the spout Z of the filter holder element PF and has the purpose of increasing the infusion time of the coffee pod so as to improve the extraction process of the coffee-based beverage.

Therefore, using the D adapter device in a PF filter holder guarantees maximum flexibility of use thus allowing to switch from ground coffee filters to filter paper coffee pods without having to wait for the filter holder cup to heat up.

An additional advantage of the D adapter is that it is very easy to clean, as the check valve can be easily disassembled to flush out coffee residue.

## Claims

1. Adapter device (D) for a filter holder element (PF) of a machine for the production by extraction of a hot liquid coffee-based beverage, **characterized in that** it comprises a main hollow cup-shaped element (1), said main element (1) carrying, arranged and mounted within it, in adjacent layers and in sequence: a first elastic element (2), said first element (2) being superimposed and coupled to a second filtering element (3), said second element (3) being superimposed on a third sealing element (4), said third element (4) being arranged in a cup-shaped element (5), said cup-shaped element (5) being able to be coupled and to cooperate with a gasket (6) and having, in its lower part, a hollow cylindrical appendix (7) within which a check valve (V) is inserted.

2. Device according to claim 1, **characterized in that** said check valve (V) substantially comprises a pawl (9), a spring (10) and a terminal element (11).
